(19) Europäisches Patentamt / European Patent Office / Office européen des brevets

(11) EP 4 582 585 A1

(12) EUROPEAN PATENT APPLICATION
published in accordance with Art. 153(4) EPC

(43) Date of publication:
09.07.2025 Bulletin 2025/28

(51) International Patent Classification (IPC):
$C23C\ 22/00^{(2006.01)}$   $C01B\ 35/12^{(2006.01)}$
$C21D\ 8/12^{(2006.01)}$   $C21D\ 9/46^{(2006.01)}$

(21) Application number: 23860513.3

(52) Cooperative Patent Classification (CPC):
C01B 35/12; C21D 8/12; C21D 9/46; C23C 22/00

(22) Date of filing: 31.08.2023

(86) International application number:
PCT/JP2023/031942

(87) International publication number:
WO 2024/048751 (07.03.2024 Gazette 2024/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 31.08.2022 JP 2022137911

(71) Applicant: NIPPON STEEL CORPORATION
Chiyoda-ku
Tokyo 100-8071 (JP)

(72) Inventors:
• YAMAGATA Ryutaro
Tokyo 100-8071 (JP)
• TAKEDA Kazutoshi
Tokyo 100-8071 (JP)
• TAKAHASHI Takafumi
Tokyo 100-8071 (JP)

(74) Representative: Vossius & Partner
Patentanwälte Rechtsanwälte mbB
Siebertstrasse 3
81675 München (DE)

(54) **MIXED POWDER, MGO PARTICLES, METHOD FOR PRODUCING GRAIN-ORIENTED ELECTRICAL STEEL SHEET, METHOD FOR PRODUCING MGO PARTICLES, AND METHOD FOR PRODUCING MIXED POWDER**

(57) The mixed powder is a mixed powder for an annealing separator containing MgO as a main agent, wherein the mixed powder contains Al and B, an Al content contained in the entire mixed powder is 0.0007 mass% or more and 0.050 mass% or less, a B content contained in the entire mixed powder is 0.005 mass% or more and 0.040 mass% or less, the B contains tri-coordinated boron, an average particle size of the mixed powder is 0.08 $\mu$m or more and 9.0 $\mu$m or less, and a formula (1) below is satisfied.

$$0.06 \le [Al]/[BO_3] < 5.00... \quad \text{Formula (1)}$$

In the formula (1), [Al] is an Al content (mass%) in the mixed powder, and $[BO_3]$ is a content (mass%) of the tri-coordinated boron in the mixed powder.

EP 4 582 585 A1

**Description**

Technical Field

The present invention relates to a mixed powder, MgO particles, a method for manufacturing a grain-oriented electrical steel sheet, a method for manufacturing MgO particles, and a method for manufacturing a mixed powder. Priority is claimed on Japanese Patent Application No. 2022-137911, filed August 31, 2022, the content of which is incorporated herein by reference.

Background Art

A grain-oriented electrical steel sheet is a soft magnetism material, and is mainly used as an iron core material of a transformer. Thus, a grain-oriented electrical steel sheet is required to have magnetic characteristics such as high magnetization and low iron loss. Iron loss is power loss due to consumption as thermal energy that occurs when the iron core is excited by an AC magnetic field, and the iron loss is required to be as low as possible from the viewpoint of energy saving.

In the manufacture of a grain-oriented electrical steel sheet, a manufacturing method including steps of hot rolling, hot-band annealing, cold rolling, decarburization annealing, and final annealing is generally applied to a steel slab adjusted to have a predetermined composition. Among these steps, in the final annealing step, a steel sheet wound in a coil shape is annealed at a high temperature for a long time to develop the crystal orientation in a Goss orientation that is good for magnetic characteristics (to increase the orientation development degree). At that time, an annealing separator is applied to prevent seizure of the coil.

As the annealing separator applied to the coil, an annealing separator containing magnesium oxide (MgO) as a main component is often used. This is because, when an annealing separator containing MgO as a main component is used, silicon dioxide ($SiO_2$) on a surface of a steel sheet reacts with MgO at the time of final annealing to apply tension to the surface of the steel sheet and form a forsterite ($Mg_2SiO_4$)-based coating (primary layer) that plays a role of imparting insulation properties to the steel sheet. That is, by using an annealing separator containing MgO as a main component, it is possible not only to prevent seizure at the time of final annealing but also to improve magnetic characteristics of a grain-oriented electrical steel sheet.

As described above, in manufacture of a grain-oriented electrical steel sheet, characteristics of the grain-oriented electrical steel sheet can be changed by an annealing separator. Therefore, in recent years, studies have been conducted on trace components contained in magnesium oxide contained in an annealing separator. Furthermore, not only has the content of trace components been studied but also the structure of a compound containing trace component elements in magnesium oxide for an annealing separator.

For example, Patent Document 1 discloses a powder for an annealing separator containing 0.04 mass% or more and 0.30 mass% or less of boron and containing magnesium oxide as a main component, in which a proportion of tri-coordinated boron in the boron is 70% or more and 95% or less.

Patent Document 2 discloses a method for manufacturing a powder for an annealing separator, the method including baking a raw material containing one or both of magnesium hydroxide and magnesium carbonate and boron, and then adjusting a proportion of tri-coordinated boron by adjusting the moisturecontent of a baked product, in which a proportion of tri-coordinated boron in boron contained in the powder for an annealing separator is 70% or more and 95% or less.

In each of Patent Documents 1 and 2, the proportion of tri-coordinated boron is defined based on findings that 1) a coating reaction behavior at a high temperature (1100°C or higher) affects purification of impurities, 2) tri-coordinated boron affects the coating reaction behavior at a high temperature, and 3) tetra-coordinated boron not only does not contribute to the purification of impurities, but also enters a steel sheet during high-temperature annealing to form $Fe_2B$, and causes repeated bending deterioration.

Citation List

Patent Document

Patent Document 1
Japanese Unexamined Patent Application, First Publication No. 2017-128772
Patent Document 2
Japanese Unexamined Patent Application, First Publication No. 2020-15982

Summary of Invention

Technical Problem

In Patent Documents 1 and 2, it is described that by controlling the amount of boron and the proportion of tri-coordinated boron in a powder for an annealing separator, it is possible to solve the problems of poor coating external appearance due to insufficient reactivity at a high temperature and poor purification of impurities from steel. However, as a result of studies by the present inventors, it has been found that when the content of boron in MgO is increased, magnetic characteristics and coating characteristics (external appearance, coating tension) may be improved, but when the content of boron is excessively increased, boron excessively enters the steel sheet, and coating defects may occur. Therefore, in the techniques of Patent Documents 1 and 2, it cannot be said that improvement of external appearance characteristics in which generation of coating defects is suppressed is sufficient.

The present invention has been made in view of the above problems, and an object of the present invention is to provide a mixed powder, MgO particles, a method for manufacturing a grain-oriented electrical steel sheet, a method for manufacturing MgO particles, and a method for manufacturing a mixed powder, for manufacturing a grain-oriented electrical steel sheet in which generation of coating defects due to application of boron is suppressed and external appearance characteristics are good. Solution to Problem

Precipitates (inhibitors) present at the time of secondary recrystallization suppress growth of grains other than the Goss orientation. Therefore, decomposition of precipitates is preferably slow. Tri-coordinated boron has high reactivity at a low temperature, and has an effect of enhancing coating characteristics and magnetic characteristics. However, the present inventors have found that when the proportion of tri-coordinated boron is too high, decomposition of precipitates at a low temperature is promoted, and grains of an orientation other than the Goss orientation are likely to grow. In addition, the present inventors have found that by increasing the proportion of an Al compound as an inhibitor having low reactivity at a low temperature, the Al compound at a low temperature is maintained, and grains of the Goss orientation can be more preferentially grown.

On the other hand, if precipitates remain, magnetic characteristics may be deteriorated. For example, when the amount of boron is excessive, a nitride of boron is generated, and magnetic characteristics may be deteriorated. **In addition, if the amount of Al is excessive, Al cannot be removed, and magnetic characteristics may be deteriorated by Al.**

From the above findings, the present inventors have found that there are appropriate ranges for the amount of tri-coordinated boron and the amount of Al. Furthermore, it has been found that a B content and a particle size also affect reactivity, and as a result of intensive studies by the present inventors, the present invention has been made.

The gist of the present invention completed based on the above findings is as follows.

[1] A mixed powder according to an aspect of the present invention is a mixed powder for an annealing separator containing MgO as a main agent, in which the mixed powder contains Al and B, an Al content contained in the entire mixed powder is 0.0007 mass% or more and 0.050 mass% or less, a B content contained in the entire mixed powder is 0.005 mass% or more and 0.040 mass% or less, the B contains tri-coordinated boron, an average particle size of the mixed powder is 0.08 μm or more and 9.0 μm or less, and a formula (1) below is satisfied.

$$0.06 \leq [\text{Al}]/[\text{BO}_3] < 5.00... \quad \text{Formula (1)}$$

In the formula (1), [Al] is an Al content (mass%) in the mixed powder, and [BO$_3$] is a content (mass%) of the tri-coordinated boron in the mixed powder.

[2] In the mixed powder according to [1], a proportion of the tri-coordinated boron in the B is preferably 5 mass% or more and less than 70 mass%.

[3] The mixed powder according to [1] or [2] preferably contains one or two or more selected from the group consisting of Cl: 0.0005 mass% or more and 0.0300 mass% or less and Ti: 0.25 mass% or more and 5.00 mass% or less.

[4] The mixed powder according to any one of [1] to [3] preferably contains 0.0005 mass% or more and 0.0300 mass% or less of Cl.

[5] The mixed powder according to any one of [1] to [4] preferably contains 0.25 mass% or more and 5.00 mass% or less of Ti.

[6] The mixed powder according to any one of [1] to [5] may contain MgO particles mainly containing MgO, B-containing particles containing B, and Al-containing particles containing Al.

[7] In addition, MgO particles according to another aspect of the present invention contain Al and B, in which an Al content is 0.0007 mass% or more and 0.0500 mass% or less, a B content is 0.005 mass% or more and 0.040 mass% or less, the B contains tri-coordinated boron, an average particle size is 0.08 μm or more and 9.0 μm or less, and a formula (1) below is satisfied.

$$0.06 \leq [\text{Al}]/[\text{BO}_3] < 5.00... \quad \text{Formula (1)}$$

In the formula (1), [Al] is an Al content (mass%) in the MgO particles, and [BO$_3$] is a content (mass%) of the tri-coordinated boron in the MgO particles.

[8] In addition, in a method for manufacturing a grain-oriented electrical steel sheet according to still another aspect of the present invention, an annealing separator containing the mixed powder according to any one of [1] to [6] or the MgO particles according to [7] is used.

[9] In addition, in a method for manufacturing MgO particles according to still another aspect of the present invention, a raw material powder containing Mg-containing raw material particles containing one or two or more selected from the group consisting of magnesium hydroxide, basic magnesium carbonate, and magnesium carbonate, B-containing raw material particles containing B, and Al-containing raw material particles containing Al is baked at a temperature of 700°C or higher and 1100°C or lower in an air or nitrogen atmosphere.

[10] In the method for manufacturing MgO particles according to [9], a content of tri-coordinated boron with respect to the mass of the raw material powder may be 0.010 mass% or more and 0.040 mass% or less.

[11] In addition, in a method for manufacturing MgO particles according to still another aspect of the present invention, raw material particles containing B and Al and containing one or two or more selected from the group consisting of magnesium hydroxide, basic magnesium carbonate, and magnesium carbonate are baked at a temperature of 700°C or higher and 1100°C or lower in an air or nitrogen atmosphere.

[12] In the method for manufacturing MgO particles according to [11], a content of tri-coordinated boron with respect to the mass of the raw material particles may be 0.010 mass% or more and 0.040 mass% or less.

[13] In addition, in a method for manufacturing a mixed powder according to still another aspect of the present invention, a raw material powder containing Mg-containing raw material particles containing one or two or more selected from the group consisting of magnesium hydroxide, basic magnesium carbonate, and magnesium carbonate, B-containing raw material particles containing B, and Al-containing raw material particles containing Al is baked at a temperature of 700°C or higher and 1100°C or lower in an air or nitrogen atmosphere.

[14] In the method for manufacturing a mixed powder according to [13], a content of tri-coordinated boron with respect to the mass of the raw material powder may be 0.010 mass% or more and 0.040 mass% or less.

Advantageous Effects of Invention

According to the present invention, it is possible to provide a mixed powder, MgO particles, a method for manufacturing a grain-oriented electrical steel sheet, a method for manufacturing MgO particles, and a method for manufacturing a mixed powder, for manufacturing a grain-oriented electrical steel sheet in which generation of coating defects due to application of boron is suppressed and external appearance characteristics are good.

Description of Embodiments

<Mixed powder>

A mixed powder according to an embodiment of the present invention is a mixed powder for an annealing separator containing MgO as a main agent, in which the mixed powder contains Al and B, an Al content contained in the entire mixed powder is 0.0007 mass% or more and 0.050 mass% or less, a B content contained in the entire mixed powder is 0.005 mass% or more and 0.040 mass% or less, the B contains tri-coordinated boron, an average particle size of the mixed powder is 0.08 $\mu$m or more and 9.0 $\mu$m or less, and the following formula (1) is satisfied.

$$0.06 \leq [\text{Al}]/[\text{BO}_3] < 5.00... \quad \text{Formula (1)}$$

In the formula (1), [Al] is an Al content (mass%) in the mixed powder, and [BO$_3$] is a content (mass%) of the tri-coordinated boron in the mixed powder. Details will be described below.

The mixed powder according to the present embodiment contains MgO as a main agent. The mixed powder contains, for example, 50.0 mass% or more of MgO. A proportion of MgO in the mixed powder is preferably 80.0 mass% or more, and more preferably 90.0 mass% or more.

The mixed powder contains MgO particles, but the MgO particles contained in the mixed powder are not limited to the MgO particles according to an embodiment of the present invention described later, and for example, MgO particles in which the proportion of MgO in the mixed powder is 50.0 mass% or more can be used.

[Al content is 0.0007 mass% or more and 0.050 mass% or less]

The mixed powder contains Al. When an Al content contained in the entire mixed powder is less than 0.0007 mass%, an amount of Al for fixing nitrogen is reduced, and an external appearance of a coating is deteriorated. On the other hand, when the Al content contained in the entire mixed powder is more than 0.050 mass%, magnetic characteristics are deteriorated. Therefore, the Al content contained in the entire mixed powder is 0.0007 mass% or more and 0.050 mass% or less. The Al content contained in the entire mixed powder may be 0.003 mass% or more, 0.004 mass% or more, or 0.005 mass% or more. In addition, the Al content contained in the entire mixed powder may be 0.045 mass% or less, 0.040 mass% or less, or 0.030 mass% or less.

The mixed powder contains, for example, Al-containing particles containing Al. The Al-containing particles contain an Al compound, and examples of the Al compound include $Al_2O_3$, AlN, $Al(OH)_3$, and AlO(OH).

The mixed powder according to the present embodiment contains boron (B). The mixed powder contains, for example, B-containing particles containing B. The B-containing particles may contain at least one of pure boron and a B compound, and examples of the B compound include $Na_2B_4O_7$, borax, calcium borate, and magnesium borate.

[B content is 0.005 mass% or more and 0.040 mass% or less]

The mixed powder contains 0.005 mass% or more and 0.040 mass% or less of boron (B). When a B content is less than 0.005 mass%, a structure of a coating is not strengthened due to a shortage of boron, and the coating is broken when gas is released from a steel sheet, so that an external appearance of the grain-oriented electrical steel sheet is deteriorated. In addition, when the B content is less than 0.005 mass%, a thickness of the coating becomes non-uniform due to a shortage of boron, and thus coating tension of the grain-oriented electrical steel sheet is deteriorated. The B content is preferably 0.008 mass% or more, and more preferably 0.010 mass% or more.

On the other hand, when the B content contained in the mixed powder is more than 0.040 mass%, heat resistance of an internal oxide layer is excessively increased, and transmission of a gas element, such as nitrogen in the steel sheet, which becomes a gas at a temperature at the time of final annealing, into an atmosphere is excessively inhibited, so that gas pressure is excessively increased, and then the gas is released in association with breakage of the coating, whereby the external appearance of the grain-oriented electrical steel sheet is deteriorated. Therefore, the B content in the mixed powder is set to 0.040 mass% or less. The B content is preferably 0.035 mass% or less, and more preferably 0.030 mass% or less.

The Al content and the B content in the mixed powder are determined by performing quantitative analysis using inductively coupled plasma mass spectrometry (ICP-MS). For quantitative analysis by ICP-MS, the mixed powder is dissolved in a mixed acid of hydrochloric acid and nitric acid. At this time, if there is any undissolved residue, the residue is recovered and dissolved in an alkaline solution to perform analysis.

$$[0.06 \leq [Al]/[BO_3] < 5.00]$$

Boron contained in the mixed powder is present in a form of tri-coordinated boron ($BO_3$) and tetra-coordinated boron ($BO_4$). Tri-coordinated boron is boron having a tri-coordinated structure in which three oxygen atoms are coordinated around a boron atom, and tetra-coordinated boron is boron having a tetra-coordinated structure in which four oxygen atoms are coordinated around a boron atom. Boron other than tri-coordinated boron is present as tetra-coordinated boron.

As a result of investigating reactions of tri-coordinated boron and tetra-coordinated boron, it has been found that tri-coordinated boron and tetra-coordinated boron have different influences on coating defects and external appearance characteristics. Specifically, tri-coordinated boron has a greater influence on decomposition of precipitates while promoting coating formation than tetra-coordinated boron. In addition, it has been found that when an amount of tri-coordinated boron is too large, reactions of coating formation and decomposition of precipitates occur too intensively at a low temperature, and coating breakage occurs due to gas release. Therefore, it has been found that by shifting the timing of decomposition of precipitates, it is possible to form a good coating while preventing coating breakage. The smaller the particle size, or the higher the tri-coordinated boron ratio, the more promoted the decomposition of precipitates due to the formation of a coating at a low temperature.

When a tri-coordinated boron content contained in the mixed powder and an Al content contained in the mixed powder satisfy the following formula (1), it is possible to suppress an adverse effect on purification while improving secondary recrystallization of the grain-oriented electrical steel sheet.

$$0.06 \leq [Al]/[BO_3] < 5.00... \text{ Formula (1)}$$

In the formula (1), [Al] is an Al content (mass%) in the mixed powder, and [BO$_3$] is a content (mass%) of the tri-coordinated boron in the mixed powder.

If [Al]/[BO$_3$] is less than 0.06, an amount of Al for fixing nitrogen is insufficient at a relatively low temperature stage during secondary recrystallization, so that a gas release suppressing effect of a coating by BO$_3$ becomes too strong, and the coating is easily broken in association with gas release at a low temperature stage, so that an oxide film on a surface of the steel sheet exhibits a non-uniform external appearance, and the external appearance of the grain-oriented electrical steel sheet is deteriorated. [Al]/[BO$_3$] is preferably 0.08 or more, and more preferably 0.15 or more.

On the other hand, when [Al]/[BO$_3$] is 5.00 or more, formation of BN is small, so that a large amount of Al nitride is formed, and the Al nitrides are maintained until reaching a relatively high temperature stage during secondary recrystallization. These nitrides decompose at a high temperature, and nitrogen generated by decomposition of the nitrides breaks a coating having low strength due to a small amount of BO$_3$ and is released, so that the external appearance of the grain-oriented electrical steel sheet is deteriorated. [Al]/[BO$_3$] is preferably 4.5 or less, and more preferably 4.0 or less.

The content [BO$_3$] of tri-coordinated boron in the mixed powder is determined by multiplying the B content determined by ICP-MS by a proportion of tri-coordinated boron in B determined by the method described later.

[Proportion of tri-coordinated boron in B is 5 mass% or more and less than 70 mass%]

The mixed powder preferably contains 5 mass% or more and less than 70 mass% of tri-coordinated boron with respect to the content of B in the mixed powder. When the proportion of tri-coordinated boron in B is 5 mass% or more, magnetic characteristics and coating characteristics can be improved. The proportion of tri-coordinated boron in B is more preferably 8 mass% or more.

On the other hand, when the proportion of tri-coordinated boron in B is 70 mass% or more, reactivity may become too high, decomposition of precipitates may be promoted, and grains may be likely to grow in an orientation other than the Goss orientation. As a result, magnetic characteristics may be deteriorated. The proportion of tri-coordinated boron in B is more preferably 50 mass% or less. Incidentally, tri-coordinated boron is mainly contained in the above-described B-containing particles, but may be contained in MgO particles or Al-containing particles.

The proportion of tri-coordinated boron in B contained in the mixed powder is determined by the following method. Measurement is performed by nuclear magnetic resonance (NMR), and in the obtained spectrum, a peak within a range of 27 ppm or less and 6 ppm or more is defined as a peak of tri-coordinated boron, a peak within a range of less than 6 ppm and -6 ppm or more is defined as a peak of tetra-coordinated boron, and a value obtained by dividing an integration area of the peak of tri-coordinated boron by a total integration area of the integration area of the peak of tri-coordinated boron and an integration area of the peak of tetra-coordinated boron is defined as the proportion of tri-coordinated boron in B.

The Al content in the mixed powder is quantitatively analyzed by ICP-MS by the method described above.

[Cl: 0.0005 mass% or more and 0.0300 mass% or less]

Cl (chlorine) is an element that enhances reactivity with SiO$_2$ formed on a surface of a steel sheet after decarburization annealing. When the mixed powder according to the present embodiment contains 0.0005 mass% or more of Cl, coating characteristics are further improved, which is preferable. A Cl content is more preferably 0.0008 mass% or more.

On the other hand, when the Cl content is more than 0.0300 mass%, there is a possibility that desulfurization is excessively suppressed due to the strength of the effect of dissolving an oxide. When the Cl content is 0.0300 mass% or less, desulfurization can be sufficiently suppressed. Therefore, the Cl content is preferably 0.0300 mass% or less. The Cl content is more preferably 0.0250 mass% or less.

[0.02 mass% or more and 4.00 mass% or less in total of one or more selected from the group consisting of Ca, Sr, and Ba]

Ca (calcium), Sr (strontium), and Ba (barium) are elements that enhance reactivity with SiO$_2$, similarly to Cl. Therefore, it is preferable that 0.02 mass% or more in total of one or more selected from the group consisting of Ca, Sr, and Ba be contained because adhesion is further improved.

On the other hand, when a content in total of one or more selected from the group consisting of Ca, Sr, and Ba is more than 4.00 mass%, desulfurization of a steel sheet may be caused due to the strength of the sulfurization tendency. When the content in total of one or more selected from the group consisting of Ca, Sr, and Ba is 4.00 mass% or less, desulfurization can be sufficiently suppressed. Therefore, the content in total of one or more selected from the group consisting of Ca, Sr, and Ba is preferably 4.00 mass% or less.

Ca may be contained in the mixed powder as a Ca compound. Examples of the Ca compound include calcium sulfate, hemihydrate gypsum, calcined gypsum, and gypsum. Sr may be contained in the mixed powder as a Sr compound.

Examples of the Sr compound include strontium sulfate. Ba may be contained in the mixed powder as a Ba compound. Examples of the Ba compound include barium sulfate. Cl, Sr, and Ba may be contained in the mixed powder as particles mainly containing each of Cl, Sr, and Ba, or may be contained in the above-described particles constituting the mixed powder.

[Ti: 0.25 mass% or more and 5 mass% or less]

Ti (titanium) is an element that serves as an oxide or becomes an oxide at an initial stage of final annealing, and then adjusts an oxygen partial pressure in an annealing atmosphere at a high temperature to about a decomposed oxygen partial pressure of $TiO_2$ to help increase a formation amount of a coating. When the mixed powder according to the present embodiment contains 0.25 mass% or more of Ti, the above effect can be obtained. A Ti content is more preferably 0.5 mass% or more.

On the other hand, when the Ti content is 5 mass% or less, deterioration of magnetic characteristics due to excessive oxygen release can be suppressed. Therefore, the Ti content is preferably 5 mass% or less. The Ti content is more preferably 4 mass% or less.

Ti may be contained in the mixed powder as, for example, $TiO_2$, titanate, titanium boride, titanium nitride, or $BaTiO_3$. Ti may be contained in the mixed powder as particles mainly containing each compound, or may be contained in the above-described particles constituting the mixed powder.

The contents of Cl, Ca, Sr, Ba, and Ti are quantitatively analyzed by ICP-MS by the method described above.

[Impurities]

Components other than the above in the mixed powder according to the present embodiment are MgO and impurities. Examples of the impurities include Fe and Si. When a content of each impurity element is 0.5 mass% or less, or 1.0 mass% or less in total, an influence on magnetic characteristics or coating characteristics of the grain-oriented electrical steel sheet is small.

[Average particle size of mixed powder]

An average particle size of the mixed powder is 0.08 $\mu$m or more and 9.0 $\mu$m or less in terms of a volume-based equivalent circle average particle size. When the average particle size of the mixed powder is less than 0.08 $\mu$m, seizure between steel sheets cannot be prevented as an annealing separator, so that formation of a coating becomes incomplete and magnetic characteristics are deteriorated. In addition, when the average particle size of the mixed powder is less than 0.08 $\mu$m, formation of a coating becomes incomplete, and the external appearance is deteriorated. In addition, when the average particle size of the mixed powder is less than 0.08 $\mu$m, formation of a coating becomes incomplete, and coating tension is deteriorated. The average particle size of the mixed powder is preferably 0.2 $\mu$m or more. On the other hand, when the average particle size of the mixed powder is more than 9.0 $\mu$m, reactivity with a steel sheet is low, so that formation of a coating becomes insufficient. The average particle size of the mixed powder is preferably 7.0 $\mu$m or less, and more preferably 6.0 $\mu$m or less.

For the average particle size of the mixed powder, a particle size distribution of a volume frequency is measured with a laser diffraction particle size distribution measuring apparatus ((apparatus name) LA-920 manufactured by HORIBA, Ltd.), and an average particle size in an equivalent circle diameter is defined as the average particle size of the mixed powder. A refractive index is set to 1.74, and dispersion treatment by ultrasonic waves is performed in pure water to measure the average particle size of the mixed powder.

<Method for manufacturing mixed powder>

The mixed powder according to the present embodiment described above is manufactured by baking a raw material powder containing Mg-containing raw material particles containing one or two or more selected from the group consisting of magnesium hydroxide, basic magnesium carbonate, and magnesium carbonate, B-containing raw material particles containing B, and Al-containing raw material particles containing Al at a temperature of 700°C or higher and 1100°C or lower in an air or nitrogen atmosphere.

The B-containing raw material particles contain Mg-containing raw material particles, boron, boric acid, magnesium boride, sodium borate, borax, and the like. The B-containing raw material particles contain, for example, 0.01 mass% or more of B.

The Al-containing raw material particles contain Mg-containing raw material particles, $Al_2O_3$, AlN, $KAl(SO_4)_2 \cdot 12H_2O$, $Al(OH)_3$, AlO(OH), and the like. The Al-containing raw material particles contain, for example, 0.01 mass% or more of Al.

Respective particle sizes of the Mg-containing raw material particles, the Al-containing raw material particles, and the B-containing raw material particles constituting the raw material powder may be, for example, a particle size at which the average particle size of the mixed powder described above is obtained, or a particle size larger than the average particle size. When the particle size of the raw material powder is larger than the average particle size of the mixed powder, a mixed powder obtained by baking by a known method may be pulverized or classified. The respective particle sizes of the Mg-containing raw material particles, the Al-containing raw material particles, and the B-containing raw material particles may be, for example, 0.08 μm or more, or 0.10 μm or more. In addition, the respective particle sizes of the Mg-containing raw material particles, the Al-containing raw material particles, and the B-containing raw material particles may be, for example, 15 μm or less, or 10 μm or less.

In addition, the raw material powder may appropriately contain Cl, Ca, Sr, Ba, and Ti. When these elements are contained in the raw material powder, one or more of these elements may be contained in one particle.

The Al content in the raw material powder is preferably 0.0007 mass% or more and 0.050 mass% or less. When the Al content in the raw material particles is 0.0007 mass% or more and 0.050 mass% or less, the Al content in the mixed powder manufactured can be set to 0.0007 mass% or more and 0.050 mass% or less. The Al content in the raw material powder may be 0.003 mass% or more, 0.004 mass% or more, or 0.005 mass% or more. In addition, the Al content in the raw material powder may be 0.045 mass% or less, 0.040 mass% or less, or 0.030 mass% or less. However, when the raw material powder contains a component that volatilizes by baking, the Al content in the raw material powder is adjusted in consideration of the component amount.

Al is mainly contained in the Al-containing raw material particles described above, but may be contained in other particles constituting the raw material powder, for example, Mg-containing raw material particles, B-containing raw material particles, Ti-containing particles, and the like.

The B content in the raw material powder is preferably 0.005 mass% or more and 0.040 mass% or less. When the B content in the raw material particles is 0.005 mass% or more and 0.040 mass% or less, the B content in the mixed powder manufactured can be set to 0.005 mass% or more and 0.040 mass% or less. The B content is more preferably 0.006 mass% or more, and still more preferably 0.008 mass% or more. In addition, the B content is more preferably 0.036 mass% or less, and still more preferably 0.032 mass% or less. However, when the raw material powder contains a component that volatilizes by baking, the B content in the raw material powder is adjusted in consideration of the component amount.

B is mainly contained in the B-containing raw material particles described above, but may be contained in other particles constituting the raw material powder, for example, Mg-containing raw material particles, Al-containing raw material particles, Ti-containing particles, and the like.

The Al content and the B content in the raw material powder are quantitatively analyzed by ICP-MS by the method described above.

A content of tri-coordinated boron with respect to the mass of the raw material powder is preferably 0.005 mass% or more and 0.040 mass% or less, and more preferably 0.010 mass% or more and 0.030 mass% or less. In addition, a content of tri-coordinated boron with respect to the B content in the raw material powder is preferably 5% or more and 70% or less. When the content of tri-coordinated boron with respect to the mass of the raw material powder or the content of tri-coordinated boron with respect to the B content is within the above range, tri-coordinated boron in the mixed powder after baking more reliably satisfies the formula (1).

The content $[BO_3]$ of tri-coordinated boron in the raw material powder is determined by multiplying the B content determined by ICP-MS by the proportion of tri-coordinated boron in B determined by the method described above.

The raw material powder is baked at a temperature of 700°C or higher and 1100°C or lower in an air atmosphere or a nitrogen atmosphere.

It is not preferable that a baking atmosphere be other than an air atmosphere or a nitrogen atmosphere because it is economically disadvantageous.

In addition, when a baking temperature is lower than 700°C, baking becomes insufficient. Therefore, the baking temperature is set to 700°C or higher. The baking temperature is preferably 720°C or higher, and more preferably 750°C or higher. On the other hand, by setting the baking temperature to 1100°C or lower, a proportion of tri-coordinated boron in the mixed powder can be increased without significantly changing the particle size while the chemical structure of the baked tri-coordinated boron is stabilized. Therefore, the baking temperature is set to 1100°C or lower. The baking temperature is preferably 1080°C or lower, and more preferably 1040°C or lower.

A baking time can be set to, for example, 5 minutes or more and 120 minutes or less. From the viewpoint of eliminating baking unevenness, the baking time is preferably 8 minutes or more, and more preferably 10 minutes or more. On the other hand, from the viewpoint of economic efficiency, the baking time is preferably 80 minutes or less, and more preferably 60 minutes or less.

The method for manufacturing a mixed powder has been described so far.

In the method for manufacturing a mixed powder described above, the aspect has been described in which the raw material powder contains the Mg-containing raw material particles, the B-containing raw material particles, and the Al-containing raw material particles on the premise that particles serving as an Mg source, particles serving as a B source, and particles serving as an Al source are different from one another. However, the present invention is not limited to such an aspect, and the Mg-containing raw material particles serving as the Mg source may contain B and/or Al so that the Mg-containing raw material particles serve as the B source and/or the Al source, or may contain other elements. The B-containing raw material particles may contain Al or may contain other elements.

In addition, the mixed powder according to the present embodiment described above may be manufactured by mixing MgO particles, Al-containing particles, and B-containing particles containing tri-coordinated boron so that MgO is a main agent, the B content is 0.005 mass% or more and 0.040 mass% or less, the average particle size is 0.08 $\mu$m or more and 9.0 $\mu$m or less, and the above formula (1) is satisfied.

<MgO particles>

MgO particles according to an embodiment of the present invention contain Al and B, in which an Al content is 0.0007 mass% or more and 0.050 mass% or less, a B content is 0.005 mass% or more and 0.040 mass% or less, the B contains tri-coordinated boron, an average particle size is 0.08 $\mu$m or more and 9.0 $\mu$m or less, and the following formula (1) is satisfied.

$$0.06 \leq [\mathrm{Al}]/[\mathrm{BO}_3] < 5.00... \quad \text{Formula (1)}$$

In the formula (1), [Al] is an Al content (mass%) in the MgO particles, and [BO$_3$] is a content (mass%) of the tri-coordinated boron in the MgO particles.

The above characteristics of the MgO particles according to the present embodiment are similar to the characteristics of the mixed powder described above, and thus detailed description thereof will be omitted here. **In addition, in the MgO particles according to the present embodiment, similarly to the mixed powder, a proportion of the tri-coordinated boron in B is preferably 5 mass% or more and less than 70 mass%. In addition, similarly to the mixed powder, the MgO particles preferably contain 0.0005 mass% or more and 0.0300 mass% or less of Cl. In addition, similarly to the mixed powder, the MgO particles preferably contain 0.25 mass% or more and 5.0 mass% or less of Ti.** However, the fact that the MgO particles contain the above components means that MgO particles constituting an MgO powder contain the above components, and that particles other than the MgO particles do not exist alone.

<Method for manufacturing MgO particles>

The MgO particles described above are manufactured by the following manufacturing method (I) or (II).

(I)
A raw material powder containing Mg-containing raw material particles containing one or two or more selected from the group consisting of magnesium hydroxide (Mg(OH)$_2$), basic magnesium carbonate (mMgCO$_3$·Mg(OH)$_2$·nH$_2$O), and magnesium carbonate (Mg(CO$_3$)), B-containing raw material particles containing B, and Al-containing raw material particles containing Al is baked at a temperature of 700°C or higher and 1100°C or lower in an air or nitrogen atmosphere.

(II)
Raw material particles containing B and Al and containing one or two or more selected from the group consisting of magnesium hydroxide, basic magnesium carbonate, and magnesium carbonate are baked at a temperature of 700°C or higher and 1100°C or lower in an air or nitrogen atmosphere.

Each manufacturing method will be described below.

[Manufacturing method (I)]

Manufacturing method (I) is a method for manufacturing MgO particles by baking a raw material powder containing Mg-containing raw material particles containing one or two or more selected from the group consisting of magnesium hydroxide, basic magnesium carbonate, and magnesium carbonate, B-containing raw material particles containing B, and Al-containing raw material particles containing Al at a temperature of 700°C or higher and 1100°C or lower in an air or nitrogen atmosphere. When the raw material powder contains a component that volatilizes by baking, the Al content and the B content are adjusted in consideration of the component amount. The present manufacturing method is basically the same as the method for manufacturing a mixed powder described above. However, the method for manufacturing a mixed powder described above is different from the present manufacturing method in that there is a case where an oxide or the like other than B and Al, which is not solid-dissolved or contained as an impurity in the MgO particles, is mixed and baked in the method for manufacturing a mixed powder described above.

[Manufacturing method (II)]

In manufacturing method (II), raw material particles containing B and Al and containing one or two or more selected from the group consisting of magnesium hydroxide, basic magnesium carbonate, and magnesium carbonate are baked at a temperature of 700°C or higher and 1100°C or lower in an air or nitrogen atmosphere. When the raw material powder contains a component that volatilizes by baking, the Al content and the B content are adjusted in consideration of the component amount.

The raw material particles containing at least one of magnesium hydroxide, basic magnesium carbonate, and magnesium carbonate contain B and Al. The Al content is 0.0007 mass% or more and 0.050 mass% or less. When the Al content in the raw material particles is 0.0007 mass% or more and 0.050 mass% or less, the Al content in the MgO particles manufactured can be set to 0.001 mass% or more and 0.050 mass% or less. The Al content in the raw material particles may be 0.003 mass% or more, 0.004 mass% or more, or 0.005 mass% or more. **In** addition, the Al content in the raw material particles may be 0.045 mass% or less, 0.040 mass% or less, or 0.030 mass% or less.

The B content is preferably 0.005 mass% or more and 0.040 mass% or less. When the B content in the raw material particles is 0.005 mass% or more and 0.040 mass% or less, the B content in the MgO particles manufactured can be set to 0.005 mass% or more and 0.040 mass% or less. The B content is more preferably 0.008 mass% or more, and still more preferably 0.010 mass% or more. In addition, the B content is more preferably 0.035 mass% or less, and still more preferably 0.030 mass% or less.

A content of tri-coordinated boron with respect to the B content in the raw material particles is preferably 5% or more and 70% or less. When the content of tri-coordinated boron with respect to the B content is within the above range, tri-coordinated boron in the MgO particles after baking under the baking conditions described later satisfies the formula (1).

Regarding the raw material particles, respective particle sizes of magnesium hydroxide, basic magnesium carbonate, and magnesium carbonate may be, for example, a particle size at which the average particle size of the MgO particles described above is obtained, or a particle size larger than the average particle size. When the particle size of the raw material particles is larger than the average particle size of the MgO particles, MgO particles obtained by baking by a known method may be pulverized. The respective particle sizes of magnesium hydroxide, basic magnesium carbonate, and magnesium carbonate may be, for example, 0.05 $\mu$m or more, or 0.08 $\mu$m or more. In addition, the respective particle sizes of magnesium hydroxide, basic magnesium carbonate, and magnesium carbonate may be, for example, 12 $\mu$m or less, or 10 $\mu$m or less.

The raw material particles are baked at a temperature of 700°C or higher and 1100°C or lower in an air atmosphere or a nitrogen atmosphere. The baking atmosphere, the baking temperature, and the baking time are the same as the baking conditions of the raw material powder described above, and thus the detailed description thereof will be omitted here.

<Method for manufacturing grain-oriented electrical steel sheet>

In a method for manufacturing a grain-oriented electrical steel sheet according to an embodiment of the present invention, a grain-oriented electrical steel sheet is manufactured using the MgO particles or mixed powder as an annealing separator. In the method for manufacturing a grain-oriented electrical steel sheet according to the present embodiment, it is possible to manufacture a grain-oriented electrical steel sheet according to a manufacturing method including, for example, a hot rolling step of hot-rolling a steel slab to obtain a hot band; a hot-band annealing step of annealing the hot band; a cold rolling step of cold-rolling the hot band after the hot-band annealing step to obtain a cold rolled sheet; a decarburization annealing step of performing decarburization annealing on the cold rolled sheet; and a final annealing step of applying an annealing separator containing the MgO particles or mixed powder to the cold rolled sheet after the decarburization annealing step, drying the cold rolled sheet, and then performing final annealing.

In the present embodiment, as the annealing separator applied before final annealing, an annealing separator obtained by mixing the mixed powder according to the present embodiment described above with water to form a slurry is used. When Ti is not contained in the mixed powder, Ti may be further mixed. By using this annealing separator, it is possible to manufacture a grain-oriented electrical steel sheet having an excellent external appearance of a coating and excellent coating adhesion.

**In** the above manufacturing method, as for the chemical composition of the steel slab and the conditions of each step, known manufacturing conditions of a grain-oriented electrical steel sheet can be applied except for the annealing separator to be used.

Regarding the annealing separator, when a mixed powder obtained by mixing MgO particles and $TiO_2$ particles is mixed with water to form a slurry (when an aqueous slurry is formed), it is preferable that the mixing be performed so that a proportion of $TiO_2$ is 0.25 to 5.0 mass% in terms of Ti content when the mass of the mixed powder is 100%.

Examples

Next, Examples of the present invention will be described, but conditions in Examples are examples of conditions adopted to confirm the feasibility and effect of the present invention, but the present invention is not limited to the conditions used in the following Examples. The present invention can adopt various conditions as long as the object of the present invention is achieved without departing from the gist of the present invention.

<Example 1>

Grain-oriented electrical steel sheets were produced using MgO particles shown in Table 1 or mixed powders of MgO particles and $TiO_2$ particles shown in Table 2. Specifically, an aqueous slurry of an annealing separator containing MgO particles of Table 1 or a mixed powder shown in Table 2 was applied to a cold-rolled steel sheet after primary recrystallization annealing. The aqueous slurry was prepared by mixing an MgO powder or a mixed powder with water. The content of the solid content (MgO particles or mixed powder) in the aqueous slurry was set to 20 mass%. The cold-rolled steel sheet having a surface coated with the aqueous slurry was subjected to baking treatment at 300°C for 30 seconds in any test number, and the aqueous slurry was dried to bake the solid content. After baking, final annealing treatment was performed. In the final annealing treatment, the steel sheet was held at 1200°C for 20 hours in any test number. By the above manufacturing steps, a grain-oriented electrical steel sheet having a longitudinal direction length of 300 mm, a sheet width direction length of 60 mm, and a sheet thickness of 0.23 mm and including a base steel sheet and a glass coating containing a composite oxide such as forsterite ($Mg_2SiO_4$) was manufactured. The "$BO_3$ ratio" shown in Table 1 indicates the proportion of tri-coordinated boron in B.

The B content, the Al content, and the Cl content in the MgO particles and the mixed powder were measured using inductively coupled plasma mass spectrometry (ICP-MS). Specifically, a solution obtained by dissolving the MgO particles or the mixed powder in a mixed acid of hydrochloric acid and nitric acid was used. When a residue remained, the residue was recovered and dissolved in an alkaline solution to perform analysis. In addition, the proportion of tri-coordinated boron in B was determined by the following method. Measurement was performed by NMR, and in the obtained spectrum, a peak within a range of 27 ppm or less and 6 ppm or more was defined as tri-coordinated boron, a peak within a range of less than 6 ppm and -6 ppm or more was defined as tetra-coordinated boron, and a value obtained by dividing an integration area of the peak of tri-coordinated boron by a total integration area of the integration area of the peak of tri-coordinated boron and an integration area of the peak of tetra-coordinated boron was defined as the proportion of tri-coordinated boron in B. The $BO_3$ content [$BO_3$] in the MgO particles and the mixed powder was determined by multiplying the B content determined by ICP-MS by the proportion of tri-coordinated boron in B.

Magnetic characteristics (B8), external appearance, and coating tension of the obtained grain-oriented electrical steel sheets were evaluated in the following manner.

[Magnetic characteristics]

Magnetic characteristics of each grain-oriented electrical steel sheet were evaluated by the following method.

Specifically, a magnetic field of 800 A/m was applied to a sample having a rolling direction length of 300 mm × a width of 60 mm to obtain a magnetic flux density B8. When B8 was 1.92 T or more, it was determined that the magnetic characteristics were good.

[External appearance]

A color tone was evaluated for a sample having a rolling direction length of 50 mm × a width of 60 mm cut out from the position of the center of the rolling direction length of each grain-oriented electrical steel sheet, and then a known insulating coating was formed to evaluate coating defects. When the color tone of a primary layer of each grain-oriented electrical steel sheet before formation of the insulating coating was uniform and there was no coating defect (hole and rusting) after formation of the insulating coating, it was determined that the external appearance was excellent. Specifically, evaluation was performed as follows.

A: The color tone before formation of the insulating coating was uniform, and the maximum area of coating defects after formation of the insulating coating was less than 2 mm$^2$.
B: The color tone before formation of the insulating coating was uniform, and the maximum area of coating defects after formation of the insulating coating was 2 mm$^2$ or more and less than 4 mm$^2$.
C: The color tone before formation of the insulating coating was uniform, and the maximum area of coating defects after formation of the insulating coating was 4 mm$^2$ or more and less than 6 mm$^2$.
D: Color unevenness was observed in the color tone before formation of the insulating coating, or the maximum area of coating defects after formation of the insulating coating was 6 mm$^2$ or more.

A or B was determined to be acceptable in the evaluation.

[Coating tension]

For a sample having a rolling direction length of 300 mm $\times$ a width of 60 mm, the primary layer was removed only on one surface by pickling, and then coating tension was determined from the radius of curvature of the curvature of the steel sheet. The method for determining the coating tension from the radius of curvature may be a known method, and for example, a method disclosed in "Report on Post-Evaluation of Development of Innovative Magnetic Materials for Reduction of Power Loss in Transformers" (February 2006) of Research Evaluation Committee of New Energy and Industrial Technology Development Organization was used.

When the coating tension was 350 g/mm$^2$ or more, it was determined that the coating tension was excellent. The results are shown in Tables 1 and 2.

[Table 1]

| No. | MgO particles | | | | | | Grain-oriented electrical steel sheet | | | Remarks |
| | Chemical component (remainder is Mg, O, and impurities) | | | | | Average particle size | B8 [T] | External appearance | Coating tension [g/mm$^2$] | |
| | B | BO$_3$ ratio | Al | Cl | [Al]/[BO$_3$] | | | | | |
| | mass% | mass% | mass% | mass% | | [μm] | | | | |
| 1 | 0.020 | 72 | 0.0300 | 0.0005 | 2.08 | 0.05 | 1.91 | D | 290 | Comparative Example |
| 2 | 0.020 | 72 | 0.0300 | 0.0005 | 2.08 | 9.80 | 1.90 | D | 321 | Comparative Example |
| 3 | 0.020 | 72 | 0.0300 | 0.0005 | 2.08 | 0.20 | 1.92 | A | 376 | Inventive Example |
| 4 | 0.020 | 72 | 0.0300 | 0.0005 | 2.08 | 1.50 | 1.94 | A | 470 | Inventive Example |
| 5 | 0.020 | 72 | 0.0300 | 0.0005 | 2.08 | 3.80 | 1.93 | A | 365 | Inventive Example |
| 6 | 0.004 | 72 | 0.0100 | 0.0005 | 3.47 | 1.50 | 1.91 | C | 345 | Comparative Example |
| 7 | 0.045 | 85 | 0.0050 | 0.0005 | 0.13 | 1.50 | 1.92 | C | 370 | Comparative Example |
| 8 | 0.008 | 4 | 0.0007 | 0.0005 | 2.19 | 1.50 | 1.94 | A | 398 | Inventive Example |
| 9 | 0.038 | 75 | 0.0110 | 0.0005 | 0.39 | 4.50 | 1.93 | A | 372 | Inventive Example |
| 10 | 0.035 | 4 | 0.0090 | 0.0005 | 6.43 | 1.50 | 1.91 | C | 388 | Comparative Example |
| 11 | 0.033 | 88 | 0.0010 | 0.0005 | 0.03 | 1.50 | 1.91 | C | 372 | Comparative Example |
| 12 | 0.005 | 72 | 0.0170 | 0.0005 | 4.72 | 6.00 | 1.93 | B | 389 | Inventive Example |
| 13 | 0.035 | 88 | 0.0020 | 0.0005 | 0.06 | 6.00 | 1.93 | B | 361 | Inventive Example |
| 14 | 0.020 | 66 | 0.0170 | 0.0005 | 1.29 | 7.00 | 1.94 | A | 420 | Inventive Example |

(continued)

| No. | MgO particles | | | | | Average particle size | Grain-oriented electrical steel sheet | | | Remarks |
|---|---|---|---|---|---|---|---|---|---|---|
| | Chemical component (remainder is Mg, O, and impurities) | | | | | | B8 [T] | External appearance | Coating tension [g/mm²] | |
| | B | BO₃ ratio | Al | Cl | [Al]/[BO₃] | | | | | |
| | mass% | mass% | mass% | mass% | | [μm] | | | | |
| 15 | 0.040 | 66 | 0.0480 | 0.0005 | 1.82 | 6.70 | 1.94 | A | 414 | Inventive Example |
| 16 | 0.040 | 66 | 0.0520 | 0.0005 | 1.97 | 6.40 | 1.91 | A | 411 | Comparative Example |

[Table 2]

| No. | MgO particles | | | | | TiO$_2$ particles | Mixed powder | | | | | | | | Grain-oriented electrical steel sheet | | | Remarks |
|---|---|---|---|---|---|---|---|---|---|---|---|---|---|---|---|---|---|---|
| | Blending ratio | Chemical component (remainder is Mg, O, and impurities) | | | | Blending ratio | Average particle size | Chemical component (remainder is Mg, O, and impurities) | | | | | | | B8 [T] | External appearance | Coating tension [g/mm$^2$] | |
| | | B | BO$_3$ ratio | Al | Cl | | | B | Al | Ti | Cl | BO$_3$ ratio | [Al]/[BO$_3$] | | | | | |
| | mass% | mass% | mass% | mass% | mass% | mass% | [μm] | mass% | mass% | mass% | mass% | mass% | | | | | | |
| 17 | 97.00 | 0.021 | 44 | 0.0180 | 0.0005 | 3.00 | 2.00 | 0.020 | 0.0170 | 1.78 | 0.0005 | 44 | 1.93 | 1.94 | A | 400 | Inventive Example |
| 18 | 96.00 | 0.021 | 8 | 0.0050 | 0.0005 | 4.00 | 2.00 | 0.020 | 0.0050 | 2.38 | 0.0005 | 8 | 3.13 | 1.94 | A | 411 | Inventive Example |
| 19 | 95.00 | 0.021 | 44 | 0.0180 | 0.0295 | 5.00 | 2.00 | 0.020 | 0.0170 | 2.97 | 0.0280 | 44 | 1.93 | 1.96 | A | 358 | Inventive Example |
| 20 | 94.00 | 0.021 | 44 | 0.0180 | 0.0160 | 6.00 | 2.00 | 0.020 | 0.0170 | 3.57 | 0.0150 | 44 | 1.93 | 1.95 | A | 372 | Inventive Example |
| 21 | 93.00 | 0.022 | 44 | 0.0180 | 0.0022 | 7.00 | 2.00 | 0.020 | 0.0170 | 4.16 | 0.0020 | 44 | 1.93 | 1.96 | A | 399 | Inventive Example |
| 22 | 92.00 | 0.022 | 44 | 0.0050 | 0.0163 | 8.00 | 2.00 | 0.020 | 0.0050 | 4.76 | 0.0150 | 44 | 0.57 | 1.93 | A | 488 | Inventive Example |
| 23 | 99.50 | 0.020 | 44 | 0.0050 | 0.0133 | 0.50 | 2.00 | 0.020 | 0.0050 | 0.30 | 0.0132 | 44 | 0.57 | 1.93 | A | 488 | Inventive Example |
| 24 | 99.50 | 0.039 | 95 | 0.0020 | 0.0168 | 0.50 | 2.00 | 0.039 | 0.0020 | 0.30 | 0.0167 | 95 | 0.05 | 1.91 | C | 322 | Comparative Example |
| 25 | 99.50 | 0.035 | 88 | 0.0020 | 0.0189 | 0.50 | 2.00 | 0.035 | 0.0020 | 0.30 | 0.0188 | 88 | 0.06 | 1.91 | B | 405 | Inventive Example |
| 26 | 99.50 | 0.020 | 15 | 0.0141 | 0.0223 | 0.50 | 2.00 | 0.020 | 0.0140 | 0.30 | 0.0222 | 15 | 4.67 | 1.93 | B | 411 | Inventive Example |
| 27 | 99.50 | 0.020 | 14 | 0.0161 | 0.0125 | 0.50 | 2.00 | 0.020 | 0.0160 | 0.30 | 0.0124 | 14 | 5.71 | 1.91 | C | 428 | Comparative Example |
| 28 | 99.50 | 0.022 | 60 | 0.0006 | 0.0168 | 0.50 | 2.00 | 0.022 | 0.0006 | 0.30 | 0.0167 | 60 | 0.08 | 1.91 | C | 355 | Comparative Example |
| 29 | 99.50 | 0.039 | 95 | 0.0533 | 0.0168 | 0.50 | 2.00 | 0.039 | 0.0530 | 0.30 | 0.0167 | 95 | 1.43 | 1.89 | A | 395 | Comparative Example |

In the example of No. 1, since the average particle size was too small, coating formation was non-uniform, and B8, the external appearance, and the coating tension of the grain-oriented electrical steel sheet were all poor.

In the example of No. 2, since the average particle size was too large, the coating formation amount was excessively small, and B8, the external appearance, and the coating tension of the grain-oriented electrical steel sheet were all poor.

In the example of No. 6, since the B content was excessively low, B8, the external appearance, and the coating tension were poor.

In the example of No. 7, since the B content was excessive, the external appearance of the grain-oriented electrical steel sheet was poor.

In the examples of Nos. 10, 11, 24, and 27, the $[Al]/[BO_3]$ value was out of the range of the above formula (1), and B8 and the external appearance of the grain-oriented electrical steel sheet were poor.

In the examples of Nos. 16 and 29, Al was more than 0.050 mass%, and B8 of the grain-oriented electrical steel sheet was poor.

In the example of No. 28, Al was less than 0.001 mass%, and B8 and the external appearance of the grain-oriented electrical steel sheet were poor.

In the examples of Nos. 3 to 5, 8, 9, 12 to 15, 17 to 23, 25, and 26, the average particle size was within a range of 0.08 μm or more and 9.0 μm or less, the Al content was 0.0007 mass% or more and 0.050 mass% or less, the B content was 0.005 mass% or more and 0.040 mass% or less, the $[Al]/[BO_3]$ value was within the range of the above formula (1), and a grain-oriented electrical steel sheet having excellent magnetic characteristics, external appearance, and coating tension was obtained. In Nos. 3 to 5, 8, 9, 14, 15, and 17 to 23, the $[Al]/[BO_3]$ value was within 0.15 to 4.00, and therefore the external appearance characteristics were particularly excellent.

<Example 2>

Grain-oriented electrical steel sheets were manufactured using a mixed powder containing MgO particles, $TiO_2$ particles, and at least one of B compound particles or Al compound particles at blending ratios shown in Table 3. Specifically, an aqueous slurry of an annealing separator containing a mixed powder of Table 3 was applied to a cold-rolled steel sheet after primary recrystallization annealing. The aqueous slurry was prepared by mixing a mixed powder of Table 3 with water. The content of the solid content (mixed powder) in the aqueous slurry was set to 20 mass%. The cold-rolled steel sheet having a surface coated with the aqueous slurry was subjected to baking treatment at 300°C for 30 seconds in any example, and the aqueous slurry was dried to bake the solid content. After baking, final annealing treatment was performed. In the final annealing treatment, the steel sheet was held at 1200°C for 20 hours in any example. By the above manufacturing steps, a grain-oriented electrical steel sheet having a longitudinal direction length of 300 mm, a sheet width direction length of 60 mm, and a sheet thickness of 0.23 mm and including a base steel sheet and a glass coating containing a composite oxide such as forsterite ($Mg_2SiO_4$) shown in Table 3 was manufactured.

[Table 3]

| No. | MgO particles | | | | | TiO₂ particles | B compound particles | | | | Al compound particles | | | Mixed powder | | | | | | |
|---|---|---|---|---|---|---|---|---|---|---|---|---|---|---|---|---|---|---|---|---|
| | Blending ratio | Chemical component (remainder is Mg, O, and impurities) | | | | Blending ratio | Type | Blending ratio | | | Type | Blending ratio | | Average particle size | Chemical component (remainder is Mg, O, and impurities) | | | | | [Al]/[BO₃] |
| | | B | BO₃ ratio | Al | Cl | | | | B | BO₃ ratio | | | Al | | B | Al | Ti | Cl | BO₃ ratio | |
| | mass% | mass% | mass% | mass% | mass% | mass% | | mass% | mass% | mass% | | mass% | mass% | [μm] | mass% | mass% | mass% | mass% | mass% | |
| 30 | 97.920 | 0.005 | 72.000 | 0.0200 | 0.0005 | 2.000 | Na₂B₄O₇ | 0.080 | 21.49 | 50 | | | | 0.06 | 0.022 | 0.0196 | 1.19 | 0.0005 | 55 | 1.62 |
| 31 | 97.920 | 0.005 | 72.000 | 0.0200 | 0.0005 | 2.000 | Na₂B₄O₇ | 0.080 | 21.49 | 50 | | | | 9.70 | 0.022 | 0.0196 | 1.19 | 0.0005 | 55 | 1.62 |
| 32 | 97.920 | 0.010 | 72.000 | 0.0200 | 0.0005 | 2.000 | Na₂B₄O₇ | 0.080 | 21.49 | 50 | | | | 0.20 | 0.027 | 0.0196 | 1.19 | 0.0005 | 58 | 1.25 |
| 33 | 97.940 | 0.010 | 72.000 | 0.0200 | 0.0005 | 2.000 | BN | 0.060 | 43.55 | 50 | | | | 1.50 | 0.036 | 0.0196 | 1.19 | 0.0005 | 56 | 0.97 |
| 34 | 97.992 | 0.001 | 72.000 | 0.0200 | 0.0005 | 2.000 | BN | 0.008 | 43.55 | 95 | | | | 3.80 | 0.004 | 0.0196 | 1.19 | 0.0005 | 90 | 4.88 |
| 35 | 96.950 | 0.020 | 72.000 | 0.0103 | 0.0005 | 3.000 | BN | 0.050 | 43.55 | 50 | | | | 1.50 | 0.041 | 0.0100 | 1.78 | 0.0005 | 60 | 0.40 |
| 36 | 96.950 | 0.010 | 60.000 | 0.1500 | 0.0005 | 3.000 | BN | 0.050 | 43.55 | 90 | | | | 1.50 | 0.031 | 0.1454 | 1.78 | 0.0005 | 81 | 5.72 |
| 37 | 96.950 | 0.010 | 4.000 | 0.0007 | 0.0005 | 3.000 | BN | 0.050 | 43.55 | 80 | | | | 1.50 | 0.031 | 0.0007 | 1.78 | 0.0005 | 57 | 0.04 |
| 38 | 96.998 | 0.040 | 75.000 | 0.0003 | 0.0005 | 3.000 | | | | | AlN | 0.002 | 65.85 | 1.50 | 0.039 | 0.0016 | 1.78 | 0.0005 | 95 | 0.04 |
| 39 | 95.920 | 0.030 | 4.000 | 0.0200 | 0.0005 | 4.000 | | | | | AlN | 0.080 | 65.85 | 1.50 | 0.029 | 0.0719 | 2.38 | 0.0005 | 45 | 5.55 |
| 40 | 92.980 | 0.020 | 44.000 | 0.0183 | 0.0301 | 7.000 | Na₂B₄O₇ | 0.060 | 21.49 | 50 | Al₂O₃ | 0.020 | 52.94 | 2.00 | 0.031 | 0.0276 | 4.16 | 0.0280 | 46 | 1.89 |

The B content, the Al content, the Cl content, and the $BO_3$ content, and the proportion of tri-coordinated boron in B ($BO_3$ ratio) in the mixed powder were measured in the same manner as in Example 1. In addition, magnetic characteristics (B8), external appearance, and coating tension of the obtained grain-oriented electrical steel sheets were evaluated in the same manner as in Example 1. The results are shown in Table 4.

[Table 4]

| No. | Grain-oriented electrical steel sheet | | | Remarks |
|---|---|---|---|---|
| | B8 [T] | External appearance | Coating tension [g/mm$^2$] | |
| 30 | 1.90 | D | 277 | Comparative Example |
| 31 | 1.90 | D | 311 | Comparative Example |
| 32 | 1.92 | A | 376 | Inventive Example |
| 33 | 1.94 | A | 470 | Inventive Example |
| 34 | 1.91 | C | 345 | Comparative Example |
| 35 | 1.93 | C | 370 | Comparative Example |
| 36 | 1.91 | C | 388 | Comparative Example |
| 37 | 1.91 | C | 372 | Comparative Example |
| 38 | 1.91 | C | 372 | Comparative Example |
| 39 | 1.91 | C | 388 | Comparative Example |
| 40 | 1.96 | A | 358 | Inventive Example |

In the example of No. 30, since the average particle size of the mixed powder was too small, coating formation was non-uniform, and B8, the external appearance, and the coating tension of the grain-oriented electrical steel sheet were all poor.

In the example of No. 31, since the average particle size of the mixed powder was too large, coating formation was non-uniform, and B8, the external appearance, and the coating tension of the grain-oriented electrical steel sheet were all poor.

In the example of No. 34, since the B content in the mixed powder was excessively low, B8, the external appearance, and the coating tension of the grain-oriented electrical steel sheet were poor.

In the example of No. 35, since the B content in the mixed powder was excessive, the external appearance of the grain-oriented electrical steel sheet was poor.

In the examples of Nos. 36 to 39, the [Al]/[$BO_3$] value was out of the range of the above formula (1), and B8 and the external appearance of the grain-oriented electrical steel sheet were poor.

In the examples of Nos. 32, 33, and 40, the average particle size was within a range of 0.08 $\mu$m or more and 9.0 $\mu$m or less, the Al content contained in the entire mixed powder was 0.0007 mass% or more and 0.050 mass% or less, the B content was 0.005 mass% or more and 0.040 mass% or less, the [Al]/[$BO_3$] value was within the range of the above formula (1), and a grain-oriented electrical steel sheet having excellent magnetic characteristics, external appearance, and coating tension of the grain-oriented electrical steel sheet was obtained. In addition, in Nos. 32, 33, and 40, the [Al]/[$BO_3$] value was within 0.15 to 4.00, and therefore the external appearance characteristics were particularly excellent.

<Example 3>

Raw material powders shown in Table 5 and $TiO_2$ particles were mixed and baked under conditions shown in Table 5 to produce mixed powders shown in Table 6. Using the produced mixed powders, grain-oriented electrical steel sheets were manufactured in the same manner as in Example 1. Hereinafter, a powder obtained by baking without mixing $TiO_2$ particles may be referred to as MgO particles.

The B content, the Al content, the Cl content, and the $BO_3$ content, and the proportion of tri-coordinated boron in B ($BO_3$ ratio) in the raw material powder, the MgO particles, and the mixed powder were measured in the same manner as in Example 1. In addition, the $BO_3$ content with respect to the mass of the raw material powder was determined by multiplying the B content determined by ICP-MS by the proportion of tri-coordinated boron in B. Magnetic characteristics (B8), external appearance, and coating tension of each of the manufactured grain-oriented electrical steel sheets were evaluated in the same manner as in Example 1. The results are shown in Table 6.
➥Too large Table

[Table 5]

| No. | Raw material particles | | | | | | | | TiO₂ particles | Baking condition | | |
| | Mg-containing raw material particles | | | | | | | | | | | |
| | Raw material type | Raw material particle size | Chemical component (remainder is Mg, O, and impurities) | | | | BO₃ content with respect to mass of raw material powder | Blending ratio | Blending ratio | Atmosphere | Temperature | Time |
| | | | B | Al | BO₃ ratio | [Al]/[BO₃] | | | | | | |
| | | μm | mass% | mass% | mass% | | mass% | mass% | mass% | | °C | min |
| 41 | MgCO₃ | 2.8 | 0.003 | 0.0030 | 50 | 2.00 | 0.002 | 100 | 0 | Air | 800 | 10 |
| 42 | MgCO₃ | 2.8 | 0.042 | 0.0420 | 50 | 2.00 | 0.021 | 100 | 0 | Air | 800 | 10 |
| 43 | MgCO₃ | 2.8 | 0.008 | 0.0220 | 50 | 5.50 | 0.004 | 100 | 0 | Air | 800 | 10 |
| 44 | MgCO₃ | 2.5 | 0.038 | 0.0004 | 50 | 0.02 | 0.019 | 100 | 0 | Air | 800 | 10 |
| 45 | MgCO₃ | 2.5 | 0.020 | 0.0040 | 50 | 0.40 | 0.010 | 100 | 0 | Air | 800 | 10 |
| 46 | MgCO₃ | 2.5 | 0.020 | 0.0040 | 50 | 0.40 | 0.010 | 95 | 5 | Air | 800 | 10 |
| 47 | MgCO₃ | 2.5 | 0.006 | 0.0040 | 85 | 0.78 | 0.005 | 95 | 5 | Air | 800 | 10 |
| 48 | MgCO₃ | 2.5 | 0.020 | 0.0010 | 50 | 0.10 | 0.010 | 95 | 5 | Air | 800 | 10 |
| 49 | MgCO₃ | 2.2 | 0.020 | 0.0020 | 50 | 0.20 | 0.010 | 95 | 5 | Air | 800 | 10 |
| 50 | MgCO₃ | 2.2 | 0.020 | 0.0010 | 50 | 0.10 | 0.010 | 95 | 5 | Air | 700 | 10 |
| 51 | MgCO₃ | 2.2 | 0.020 | 0.0020 | 50 | 0.20 | 0.010 | 95 | 5 | Air | 1100 | 10 |
| 52 | MgCO₃ | 2.2 | 0.020 | 0.0010 | 50 | 0.10 | 0.010 | 95 | 5 | Air | 680 | 10 |
| 53 | MgCO₃ | 2.2 | 0.020 | 0.0020 | 50 | 0.20 | 0.010 | 95 | 5 | Air | 1120 | 10 |
| 54 | MgCO₃ | 2.2 | 0.018 | 0.0040 | 66 | 0.34 | 0.012 | 95 | 5 | Nitrogen atmosphere | 800 | 10 |
| 55 | mMgCO₃·Mg(OH)₂·nH₂O | 2.4 | 0.006 | 0.0040 | 35 | 1.90 | 0.012 | 95 | 5 | Air | 800 | 10 |
| 56 | Mg(OH)₂ | 2.5 | 0.025 | 0.0010 | 35 | 0.11 | 0.009 | 95 | 5 | Air | 800 | 10 |

| No. | Raw material type | Raw material particles | | | | | | | TiO$_2$ particles | Baking condition | | |
| | | Mg-containing raw material particles | | | | | | | | | | |
| | | Raw material particle size | Chemical component (remainder is Mg, O, and impurities) | | | | BO$_3$ content with respect to mass of raw material powder | Blending ratio | Blending ratio | Atmosphere | Temperature | Time |
| | | | B | Al | BO$_3$ ratio | [Al]/[BO$_3$] | | | | | | |
| | | $\mu$m | mass% | mass% | mass% | | mass% | mass% | mass% | | °C | min |
| 57 | MgCO$_3$+ mMgCO$_3$·Mg ( OH)$_2$·nH$_2$O+M-g(OH)$_2$ | 2.2 | 0.011 | 0.0020 | 15 | 1.21 | 0.005 | 95 | 5 | Air | 800 | 10 |

[Table 6]

| No. | MgO particles or mixed powder | | | | | | | Grain-oriented electrical steel sheet | | | Remarks |
|---|---|---|---|---|---|---|---|---|---|---|---|
| | Average particle size [μm] | Chemical component (remainder is Mg, O, and impurities) | | | | | | B8 [T] | External appearance | Coating tension [g/mm²] | |
| | | B mass% | Al mass% | BO₃ ratio mass% | [Al]/[BO₃] | Cl mass% | Ti mass% | | | | |
| 41 | 3.40 | 0.003 | 0.0030 | 50 | 2.00 | 0.0005 | 0.00 | 1.93 | C | 345 | Comparative Example |
| 42 | 3.40 | 0.042 | 0.0420 | 50 | 2.00 | 0.0005 | 0.00 | 1.92 | C | 370 | Comparative Example |
| 43 | 3.40 | 0.008 | 0.0220 | 50 | 5.50 | 0.0005 | 0.00 | 1.91 | C | 410 | Comparative Example |
| 44 | 3.40 | 0.038 | 0.0004 | 50 | 0.02 | 0.0005 | 0.00 | 1.91 | C | 372 | Comparative Example |
| 45 | 3.40 | 0.020 | 0.0040 | 50 | 0.40 | 0.0005 | 0.00 | 1.94 | A | 398 | Inventive Example |
| 46 | 3.40 | 0.019 | 0.0038 | 50 | 0.40 | 0.0005 | 2.97 | 1.94 | A | 352 | Inventive Example |
| 47 | 3.40 | 0.006 | 0.0038 | 50 | 1.33 | 0.0005 | 2.97 | 1.92 | A | 362 | Inventive Example |
| 48 | 3.40 | 0.019 | 0.0010 | 50 | 0.10 | 0.0005 | 2.97 | 1.93 | B | 405 | Inventive Example |
| 49 | 3.40 | 0.019 | 0.0019 | 50 | 0.20 | 0.0005 | 2.97 | 1.95 | A | 392 | Inventive Example |
| 50 | 3.40 | 0.019 | 0.0010 | 66 | 0.08 | 0.0005 | 2.97 | 1.92 | B | 372 | Inventive Example |
| 51 | 3.40 | 0.019 | 0.0019 | 20 | 0.50 | 0.0005 | 2.97 | 1.93 | A | 352 | Inventive Example |
| 52 | 3.40 | 0.019 | 0.0010 | MgO as a main agent was not obtained | | | | | | | Comparative Example |
| 53 | 9.60 | 0.019 | 0.0019 | 50 | 0.20 | 0.0005 | 2.97 | 1.94 | C | 344 | Comparative Example |
| 54 | 3.40 | 0.017 | 0.0038 | 66 | 0.34 | 0.0005 | 2.97 | 1.93 | A | 380 | Inventive Example |
| 55 | 3.40 | 0.006 | 0.0040 | 35 | 1.90 | 0.0005 | 2.97 | 1.94 | A | 365 | Inventive Example |
| 56 | 3.40 | 0.024 | 0.0010 | 35 | 0.11 | 0.0005 | 2.97 | 1.92 | B | 373 | Inventive Example |
| 57 | 3.40 | 0.010 | 0.0019 | 15 | 1.21 | 0.0005 | 2.97 | 1.94 | A | 388 | Inventive Example |

In the example of No. 41, the B content in the obtained MgO particles was less than 0.005 mass%, and the external appearance and the coating tension of the grain-oriented electrical steel sheet manufactured using the MgO particles were poor.

In the example of No. 42, the B content in the obtained MgO particles was more than 0.040 mass%, and the external appearance of the grain-oriented electrical steel sheet manufactured using the MgO particles was poor.

In the examples of Nos. 43 and 44, the $[Al]/[BO_3]$ value of the obtained MgO particles was out of the range of the above formula (1), and B8 and the external appearance of the grain-oriented electrical steel sheet were poor.

In the examples of Nos. 45 to 51 and 54 to 57, the Al content contained in the MgO particles or the entire mixed powder was 0.0007 mass% or more and 0.050 mass% or less, the B content was 0.005 mass% or more and 0.040 mass% or less, the average particle size of the MgO particles or the mixed powder was 0.08 μm or more and 9.0 μm or less, the $[Al]/[BO_3]$ value of the MgO particles or the mixed powder was within the range of the above formula (1), and a grain-oriented electrical steel sheet having excellent magnetic characteristics, external appearance, and coating tension of the grain-oriented electrical steel sheet was obtained. In addition, in Nos. 45 to 47, 49, 51, 54, 55, and 57, the $[Al]/[BO_3]$ value was within 0.15 to 4.00, and therefore the external appearance characteristics were particularly excellent.

In the example of No. 52, since the baking temperature was too low, baking of the raw material powder was insufficient, and MgO as a main agent was not obtained.

In the example of No. 53, since the baking temperature was too high, the particle size of the mixed powder was too large, and the external appearance and the coating tension of the grain-oriented electrical steel sheet were poor.

<Example 4>

Raw material powders shown in Table 7 were baked under conditions shown in Table 7 to produce mixed powders shown in Table 8. Using the produced mixed powders, grain-oriented electrical steel sheets were manufactured in the same manner as in Example 2.

The B content, the Al content, the Cl content, and the $BO_3$ content, and the proportion of tri-coordinated boron in B ($BO_3$ ratio) in the raw material powder and the mixed powder were measured in the same manner as in Example 1. In addition, the $BO_3$ content with respect to the mass of the raw material powder was determined by multiplying the B content determined by ICP-MS by the proportion of tri-coordinated boron in B. In addition, magnetic characteristics (B8), external appearance, and coating tension of each of the manufactured grain-oriented electrical steel sheets were evaluated in the same manner as in Example 1. The results are shown in Table 8.

[Table 7]

| No. | Mg-containing raw material particles | | | | | B-containing raw material particles | | | Al-containing raw material particles | | | TiO₂ particles | BO₃ content with respect to mass of raw material powder | B content | Baking condition | | |
|---|---|---|---|---|---|---|---|---|---|---|---|---|---|---|---|---|---|
| | Raw material type | Raw material particle size | B | Al | Blending ratio | B compound | Blending ratio | B | Al compound | Blending ratio | Al | Blending ratio | | | Atmosphere | Temperature | Time |
| | | μm | mass% | mass% | mass% | | mass% | mass% | | mass% | mass% | mass% | mass% | mass% | Air | °C | min |
| | | | | | | | | | | | | | | | Air | 900 | 10 |
| 58 | Mg(OH)₂ | 2.5 | 0.0010 | 0.005 | 99.950 | Na₂B₄O₇ | 0.050 | 21.49 | | | | 0.000 | 0.006 | 0.012 | Air | 900 | 10 |
| 59 | Mg(OH)₂ | 2.5 | 0.0010 | 0.005 | 94.930 | Na₂B₄O₇ | 0.050 | 21.49 | Al₂O₃ | 0.020 | 52.9 | 5.000 | 0.006 | 0.012 | Air | 900 | 10 |
| 60 | Mg(OH)₂ | 2.5 | 0.0080 | 0.005 | 94.990 | | | | Al₂O₃ | 0.010 | 52.9 | 5.000 | 0.005 | 0.008 | Air | 900 | 10 |
| 61 | Mg(OH)₂ | 2.5 | 0.0008 | 0.001 | 99.820 | Na₂B₄O₇ | 0.180 | 21.49 | | | | 0.000 | 0.026 | 0.039 | Air | 900 | 10 |
| 62 | Mg(OH)₂ | 2.5 | 0.0010 | 0.005 | 99.990 | | | | Al₂O₃ | 0.010 | 52.9 | 0.000 | 0.001 | 0.001 | Air | 900 | 10 |
| 63 | Mg(OH)₂ | 2.5 | 0.0010 | 0.005 | 99.950 | Na₂B₄O₇ | 0.050 | 21.49 | | | | 0.000 | 0.006 | 0.012 | Air | 700 | 10 |
| 64 | Mg(OH)₂ | 2.5 | 0.0010 | 0.005 | 99.950 | Na₂B₄O₇ | 0.005 | 21.49 | | | | 0.000 | 0.006 | 0.012 | Air | 1100 | 10 |
| 65 | Mg(OH)₂ | 2.5 | 0.0010 | 0.005 | 99.950 | Na₂B₄O₇ | 0.050 | 21.49 | | | | 0.000 | 0.006 | 0.012 | Air | <u>650</u> | 10 |
| 66 | Mg(OH)₂ | 2.5 | 0.0010 | 0.005 | 99.950 | Na₂B₄O₇ | 0.050 | 21.49 | | | | 0.000 | 0.006 | 0.012 | Air | <u>1150</u> | 10 |
| 67 | Mg(OH)₂ | 2.5 | 0.0110 | 0.005 | 99.990 | | | 21.49 | Al₂O₃ | 0.010 | 52.9 | 0.000 | 0.005 | 0.011 | Nitrogen atmosphere | 900 | 10 |
| 68 | MgCO₃ | 2.5 | 0.0080 | 0.004 | 99.980 | | | 21.49 | Al₂O₃ | 0.020 | 52.9 | 0.000 | 0.006 | 0.008 | Air | 900 | 10 |
| 69 | mMgCO₃·Mg(OH)₂·nH₂O | 2.5 | 0.0130 | 0.005 | 99.970 | | | 21.49 | Al₂O₃ | 0.030 | 52.9 | 0.000 | 0.006 | 0.013 | Air | 900 | 10 |
| 70 | Mg(OH)₂ | 2.5 | 0.0010 | 0.005 | 99.970 | B₂O₃ | 0.030 | 31.03 | | | | 0.000 | 0.005 | 0.010 | Air | 900 | 10 |
| 71 | Mg(OH)₂ | 2.5 | 0.0010 | 0.005 | 99.996 | B | 0.004 | 100.00 | | | | 0.000 | 0.008 | 0.005 | Air | 900 | 10 |
| 72 | Mg(OH)₂ | 2.5 | 0.0010 | 0.005 | 99.940 | Na₂B₄O₇ | 0.050 | 21.49 | Al(OH)₃ | 0.010 | 34.6 | 0.000 | 0.006 | 0.012 | Air | 900 | 10 |
| 73 | Mg(OH)₂ | 2.5 | 0.0010 | 0.005 | 99.942 | Na₂B₄O₇ | 0.050 | 21.49 | AlO(OH) | 0.008 | 45.0 | 0.000 | 0.006 | 0.012 | Air | 900 | 10 |

| No. | Raw material powder | | | | | | | | | | | | | | | Baking condition | | |
|---|---|---|---|---|---|---|---|---|---|---|---|---|---|---|---|---|---|---|
| | Mg-containing raw material particles | | | | | B-containing raw material particles | | | Al-containing raw material particles | | | $TiO_2$ particles | $BO_3$ content with respect to mass of raw material powder | B content | Atmosphere | Temperature | Time |
| | Raw material type | Raw material particle size | B | Al | Blending ratio | B compound | Blending ratio | B | Al compound | Blending ratio | Al | Blending ratio | | | | | °C | min |
| | | μm | mass% | mass% | mass% | | mass% | mass% | | mass% | mass% | mass% | mass% | mass% | Air | 900 | 10 |
| 74 | $MgCO_3$+m$MgCO_3$·$Mg(OH)_2$·n$H_2O$+$Mg(OH)_2$ | 2.5 | 0.0140 | 0.004 | 99.950 | $Na_2B_4O_7$ | 0.050 | 21.49 | | | | 0.000 | 0.012 | 0.025 | Air | 900 | 10 |

EP 4 582 585 A1

[Table 8]

| No. | Average particle size [μm] | Mixed powder Chemical component (remainder is Mg, O, and impurities) | | | | | | Grain-oriented electrical steel sheet | | | Remarks |
|---|---|---|---|---|---|---|---|---|---|---|---|
| | | B mass% | Al mass% | BO₃ ratio mass% | [Al]/[BO₃] | Cl mass% | Ti mass% | B8 [T] | External appearance | Coating tension [g/mm²] | |
| 58 | 2.8 | 0.012 | 0.005 | 50 | 0.85 | 0.0005 | 0.00 | 1.94 | A | 398 | Inventive Example |
| 59 | 2.8 | 0.012 | 0.015 | 50 | 2.62 | 0.0005 | 2.97 | 1.93 | A | 405 | Inventive Example |
| 60 | 2.8 | 0.008 | 0.010 | 50 | 2.64 | 0.0005 | 2.97 | 1.95 | A | 392 | Inventive Example |
| 61 | 2.8 | 0.039 | 0.001 | 66 | 0.04 | 0.0005 | 0.00 | 1.91 | C | 355 | Comparative Example |
| 62 | 2.8 | 0.001 | 0.010 | 50 | 20.59 | 0.0005 | 0.00 | 1.91 | C | 366 | Comparative Example |
| 63 | 2.5 | 0.012 | 0.005 | 50 | 0.85 | 0.0005 | 0.00 | 1.92 | A | 372 | Inventive Example |
| 64 | 5.5 | 0.012 | 0.005 | 50 | 0.85 | 0.0005 | 0.00 | 1.93 | A | 355 | Inventive Example |
| 65 | 2.2 | 0.012 | 0.005 | | | | | MgO as a main agent was not obtained | | | Comparative Example |
| 66 | 9.2 | 0.012 | 0.005 | 50 | 0.85 | 0.0005 | 0.00 | 1.92 | C | 342 | Comparative Example |
| 67 | 4.2 | 0.011 | 0.010 | 50 | 1.87 | 0.0005 | 0.00 | 1.94 | A | 392 | Inventive Example |
| 68 | 4.2 | 0.008 | 0.015 | 50 | 3.65 | 0.0005 | 0.00 | 1.93 | A | 388 | Inventive Example |
| 69 | 4.2 | 0.013 | 0.021 | 50 | 3.21 | 0.0005 | 0.00 | 1.94 | A | 372 | Inventive Example |
| 70 | 4.2 | 0.010 | 0.005 | 50 | 0.97 | 0.0005 | 0.00 | 1.94 | A | 362 | Inventive Example |
| 71 | 4.2 | 0.005 | 0.005 | 50 | 2.00 | 0.0005 | 0.00 | 1.94 | A | 365 | Inventive Example |
| 72 | 4.2 | 0.012 | 0.008 | 50 | 1.44 | 0.0005 | 0.00 | 1.94 | A | 370 | Inventive Example |
| 73 | 4.2 | 0.012 | 0.009 | 50 | 1.46 | 0.0005 | 0.00 | 1.93 | A | 399 | Inventive Example |
| 74 | 4.2 | 0.025 | 0.004 | 50 | 0.32 | 0.0005 | 0.00 | 1.92 | A | 382 | Inventive Example |

As shown in Nos. 58 to 60, 63, 64, and 67 to 74, in the mixed powder manufactured using a raw material powder containing B and Al, the Al content contained in the entire mixed powder was 0.0007 mass% or more and 0.050 mass% or less, the B content was 0.005 mass% or more and 0.040 mass% or less, and MgO particles satisfying the above formula (1) were obtained. As a result, a grain-oriented electrical steel sheet having excellent magnetic characteristics, external appearance, and coating tension of the grain-oriented electrical steel sheet was obtained. In addition, in Nos. 58 to 60, 63, 64, and 67 to 74, the [Al]/[BO$_3$] value was within 0.15 to 4.00, and therefore the external appearance characteristics were particularly excellent.

In the examples of Nos. 61 and 62, the [Al]/[BO$_3$] value of the obtained mixed powder was out of the range of the above formula (1), and B8 and the external appearance of the grain-oriented electrical steel sheet were poor.

In the example of No. 65, since the baking temperature was too low, baking of the raw material powder was insufficient, and MgO as a main agent was not obtained.

In the example of No. 66, since the baking temperature was too high, the particle size of the mixed powder was too large, and the external appearance and the coating tension of the grain-oriented electrical steel sheet were poor.

**Claims**

1. A mixed powder for an annealing separator comprising MgO as a main agent, wherein

   the mixed powder contains Al and B,
   an Al content contained in the entire mixed powder is 0.0007 mass% or more and 0.050 mass% or less,
   a B content contained in the entire mixed powder is 0.005 mass% or more and 0.040 mass% or less,
   the B contains tri-coordinated boron,
   an average particle size of the mixed powder is 0.08 $\mu$m or more and 9.0 $\mu$m or less, and
   a formula (1) below is satisfied:

$$0.06 \leq [\mathrm{Al}]/[\mathrm{BO_3}] < 5.00... \ \ \text{Formula (1)}$$

   in the formula (1), [Al] is an Al content (mass%) in the mixed powder, and [BO$_3$] is a content (mass%) of the tri-coordinated boron in the mixed powder.

2. The mixed powder according to claim 1, wherein a proportion of the tri-coordinated boron in the B is 5 mass% or more and less than 70 mass%.

3. The mixed powder according to claim 1 or 2, further comprising one or two or more selected from the group consisting of Cl: 0.0005 mass% or more and 0.0300 mass% or less and Ti: 0.25 mass% or more and 5.00 mass% or less.

4. The mixed powder according to claim 3, further comprising 0.0005 mass% or more and 0.0300 mass% or less of Cl.

5. The mixed powder according to claim 3, further comprising 0.25 mass% or more and 5.00 mass% or less of Ti.

6. The mixed powder according to claim 1 or 2, wherein the mixed powder contains MgO particles mainly containing MgO, B-containing particles containing B, and Al-containing particles containing Al.

7. MgO particles comprising Al and B, wherein

   an Al content is 0.0007 mass% or more and 0.050 mass% or less,
   a B content is 0.005 mass% or more and 0.040 mass% or less,
   the B contains tri-coordinated boron,
   an average particle size is 0.08 $\mu$m or more and 9.0 $\mu$m or less, and
   a formula (1) below is satisfied:

$$0.06 \leq [\mathrm{Al}]/[\mathrm{BO_3}] < 5.00... \ \ \text{Formula (1)}$$

   in the formula (1), [Al] is an Al content (mass%) in the MgO particles, and [BO$_3$] is a content (mass%) of the tri-coordinated boron in the MgO particles.

8. A method for manufacturing a grain-oriented electrical steel sheet, the method comprising using an annealing separator containing the mixed powder according to claim 1 or 2 or the MgO particles according to claim 7.

9. A method for manufacturing MgO particles, the method comprising baking a raw material powder containing Mg-containing raw material particles containing one or two or more selected from the group consisting of magnesium hydroxide, basic magnesium carbonate, and magnesium carbonate, B-containing raw material particles containing B, and Al-containing raw material particles containing Al at a temperature of 700°C or higher and 1100°C or lower in an air or nitrogen atmosphere.

10. The method for manufacturing MgO particles according to claim 9, wherein a content of tri-coordinated boron with respect to the mass of the raw material powder is 0.005 mass% or more and 0.040 mass% or less.

11. A method for manufacturing MgO particles, the method comprising baking raw material particles containing B and Al and containing one or two or more selected from the group consisting of magnesium hydroxide, basic magnesium carbonate, and magnesium carbonate at a temperature of 700°C or higher and 1100°C or lower in an air or nitrogen atmosphere.

12. The method for manufacturing MgO particles according to claim 11, wherein a content of tri-coordinated boron with respect to the mass of the raw material particles is 0.005 mass% or more and 0.040 mass% or less.

13. A method for manufacturing a mixed powder, the method comprising baking a raw material powder containing Mg-containing raw material particles containing one or two or more selected from the group consisting of magnesium hydroxide, basic magnesium carbonate, and magnesium carbonate, B-containing raw material particles containing B, and Al-containing raw material particles containing Al at a temperature of 700°C or higher and 1100°C or lower in an air or nitrogen atmosphere.

14. The method for manufacturing a mixed powder according to claim 13, wherein a content of tri-coordinated boron with respect to the mass of the raw material powder is 0.005 mass% or more and 0.040 mass% or less.

## INTERNATIONAL SEARCH REPORT

| International application No. |
|---|
| **PCT/JP2023/031942** |

| A. | CLASSIFICATION OF SUBJECT MATTER |
|---|---|

*C23C 22/00*(2006.01)i; *C01B 35/12*(2006.01)i; *C21D 8/12*(2006.01)i; *C21D 9/46*(2006.01)i
FI:    C23C22/00 A; C21D8/12 B; C21D9/46 501B; C01B35/12 D

According to International Patent Classification (IPC) or to both national classification and IPC

| B. | FIELDS SEARCHED |
|---|---|

Minimum documentation searched (classification system followed by classification symbols)

C23C22/00; C01B35/12; C21D8/12; C21D9/46; C01F5/02-5/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2004-176144 A (TATEHO CHEM IND CO., LTD.) 24 June 2004 (2004-06-24)<br>paragraphs [0026]-[0029], [0033] | 9 |
| X | JP 57-34022 A (SHIN NIPPON KAGAKU KOGYO KK) 24 February 1982 (1982-02-24)<br>p. 4, lower right column, line 1 to p. 5, upper left column, line 9 | 11 |
| A | JP 2017-128773 A (JFE STEEL CORP.) 27 July 2017 (2017-07-27) | 1-14 |
| A | JP 2017-128772 A (JFE STEEL CORP.) 27 July 2017 (2017-07-27) | 1-14 |
| A | JP 3-75219 A (ASAHI GLASS CO., LTD.) 29 March 1991 (1991-03-29) | 1-14 |
| A | JP 1-177376 A (NIPPON STEEL CORP.) 13 July 1989 (1989-07-13) | 1-14 |

☐ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 October 2023** | **14 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/031942**

| Patent document cited in search report | | | Publication date (day/month/year) | Patent family member(s) | Publication date (day/month/year) |
|---|---|---|---|---|---|
| JP | 2004-176144 | A | 24 June 2004 | (Family: none) | |
| JP | 57-34022 | A | 24 February 1982 | (Family: none) | |
| JP | 2017-128773 | A | 27 July 2017 | (Family: none) | |
| JP | 2017-128772 | A | 27 July 2017 | (Family: none) | |
| JP | 3-75219 | A | 29 March 1991 | (Family: none) | |
| JP | 1-177376 | A | 13 July 1989 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022137911 A
- JP 2017128772 A
- JP 2020015982 A